# FASCICULE DE BREVET EUROPEEN

(11) **EP 0 647 158 B1**
(45) Date de publication et mention de la délivrance du brevet: **20.08.1997**
(21) Numéro de dépôt: 93913166.0
(22) Date de dépôt: 21.06.1993
(51) Int. Cl.: B01J 31/32, D21C 9/10

(54) **PROCEDE DE DELIGNIFICATION ET DE BLANCHIMENT D'UNE MATIERE LIGNOCELLULOSIQUE**
VERFAHREN ZUR DELIQUIFIZIERUNG UND ZUM BLEICHEN VON EINEM LIGENOCELLULOSISCHEN MATERIAL
METHOD FOR DELIGNIFYING AND BLEACHING A LIGNOCELLULOSE MATERIAL

(30) Priorité: 22.06.1992 FR 9207577
(43) Date de publication de la demande: 12.04.1995
(73) Titulaire: ELF AQUITAINE, 92400 Courbevoie (FR)
(72) Inventeur: BOE, Jean-François, F-31400 Toulouse (FR); GIRERD, Jean-Jacques, F-91190 Gif-sur-Yvette (FR); GUIGNARD, Claude, F-40290 Ossage (FR); SERIS, Jean-Louis, F-64110 Jurançon (FR); VERLHAC, Jean-Baptiste, F-33400 Talence (FR)
(74) Mandataire: Boillot, Marc
(86) Numéro de dépôt international: FR9300613
(87) Numéro de publication internationale: WO9400234

(56) Documents cités:
- EP-A- 0 350 395
- EP-A- 0 458 397
- US-A- 5 153 161

## Description

La présente invention concerne un procédé de délignification et de blanchiment d'une matière lignocellulosique par une solution aqueuse d'un oxydant et d'un catalyseur d'oxydoréduction.

L'invention se rapporte donc au domaine technique du bois et de la pâte à papier et également à celui des catalyseurs d'oxydoréductions naturels ou synthétiques.

De nombreux travaux concernent des procédés de dégradation de la lignine du bois ou de la pâte à papier.

Comme le rappellent A. Paszcynski et al., Applied and Environmental Microbiology, 1988, 62-68, beaucoup de ces travaux ont pour base l'étude des phénomènes naturels de dégradation du bois.

C'est ainsi qu'une souche particulière de basidiomycètes connue sous le nom de "Phanerochaete chryosporium" et entraînant la pourriture blanche du bois, a été particulièrement étudiée sur le plan des mécanismes biochimiques intervenant dans la délignification.

Deux types d'enzymes extracellulaires comportant des groupes porphyrines interviennent dans la dégradation du bois.

Ces enzymes ont en commun l'aptitude à décomposer les peroxydes,caractéristique des peroxydases; leur cycle catalytique comporte l'oxydation de la porphyrine du fer par le peroxyde,puis le retour à l'état initial grâce à des électrons prélevés sur les molécules présentes dans le milieu.

Les ligninases capturent un électron sur les noyaux aromatiques de la lignine et forment ainsi des espèces radical cation qui évoluent d'une manière non enzymatique et qui entraînent la dépolymérisation de la lignine.

Les peroxydases du manganèse oxydent les cations Mn²⁺ en Mn³⁺. Les cations Mn³⁺ diffusent dans les structures du bois et capturent un électron pour redonner Mn²⁺. Les auteurs ci-dessus ont traités des copeaux de bois ou de la pâte à papier avec plusieurs porphyrines ferriques naturelles ou synthétiques en présence d'un oxydant choisi parmi le peroxyde d'hydrogène ou l'hydroperoxyde de tert-butyle (HTB), dans un milieu aqueux.

Les expériences ont été réalisées avec un rapport massique bois/eau de 0,2 et pâte/eau de 0,1 %, à environ 100°C (température de reflux de l'eau) pendant 24 à 48 h.

La pâte Kraft choisie traitée par une hémine ferrique/HTB voit son nombre Kappa diminuer de 36 à 2 avec une élimination de 100 % de la lignine et seulement 10 % de la cellulose.

Par contre, les copeaux de bois traités dans des conditions de température et de durée identiques par du peroxyde d'hydrogène seul ou par la combinaison H₂0₂/hémine conduisent aux mêmes résultats, à savoir une dégradation non sélective et du même ordre de grandeur de la lignine et de la cellulose. L'hémine ne semble jouer aucun rôle spécifique en présence de H₂0₂.

Par contre, en présence de HTB, par un reflux de 48h, 38 % de lignine sont éliminés pour une élimination concomitante de 9,5 % de cellulose.

En conclusion de leur travaux, ces auteurs reconnaissent que leur procédé est inapplicable industriellement.

De leur côté P.S. Skerker et al,Biotechnology in pulp and paper manufacture, chap 18, 203-210, Butterworth, Heinemann (1990), ont étudiés le blanchiment biomimétique de pâtes Kraft à l'aide de porphyrines synthétiques en présence de HTB. La porphyrine soluble dans l'eau et résistante à l'oxydation est le méso-tétra (2,6-dichloro-3-sulfonatophényl)-β-octachloroporphinato Fe (III).

Il faut remarquer que cette porphyrine comprend 16 atomes de chlores substituant les noyaux phényle et pyrrole et 4 groupes sulfonato et que sa synthèse est très coûteuse. Le remplacement du fer par le manganèse dans cette structure porphyrinique ne change pas sensiblement les résultats.

Avec une pâte de consistance 2,5 % on obtient avec la porphyrine Fe (III) ci-dessus une délignification supérieure à 45 %, en 15 min, à 80°C dans de l'eau, le nombre Kappa diminuant de 23,5 à 18,7. Cependant ces conditions entraînent une diminution de la viscosité de la pâte par environ un facteur 2, signe d'une dépolymérisation intense de la cellulose.

Dans leur conclusion, ces auteurs reconnaissent eux-mêmes que leur procédé est inexploitable industriellement.

Forrester et al., Biochemical and Biophysical research communications vol 157, N°3, 992-999, 1988, se sont intéressés au deuxième type d'enzymes intervenant dans la délignification provoquée par le Phanerochaete chrysosporium. Ces auteurs ont montré qu'un système biomimétique plus simple, constitué par le cation Mn3+ complexé par le pyrophosphate et en présence de glutathion réduit, oxydait l'alcool vératrylique en aldéhyde correspondant et provoquait également la délignification de fibres de bois.

Avec l'alcool vératrylique, si on ajoute du peroxyde d'hydrogène au milieu réactionnel précédent, on obtient environ 3 fois moins d'aldéhyde vératrylique.

En dehors du domaine technique du bois et de la pâte à papier, d'autres complexes métalliques naturels impliqués dans les oxydations biologiques ont fait l'objet de publications.

Saver, Acc. Chem. Res. 13,249 (1980) et références citées, rappelle que des complexes contenant deux atomes de manganèse peuvent intervenir dans les oxydations biologiques.

Hodgson et al, Inorganica Chemical Acta 141(1988) 167-168 fait le point sur les complexes synthétiques à deux atomes de manganèse et décrit, en particulier, certains dans lesquels le métal est dans des états d'oxydation élevés.

On connaît le complexe 2,2'-bipyridine (bpy) de formule [(bpy)²MnO]₂³⁺ et son analogue 1,10-phénanthroline (phen). Ces complexes ont été isolés sous forme de solides stables dans l'état d'oxydation Mn(III)/Mn(IV) et ont été étudiés en solution dans leur état d'oxydation complète Mn(IV)/Mn(IV).

Le complexe phen a été isolé solide dans l'état Mn(IV)/Mn(IV) et sa structure caractérisé par M. Stebler et al.,Inorg.Chem,25,4743(1986).

D.J. Hodgson et al. , dans la publication ci-dessus rapportent la synthèse d'un nouveau complexe (I) : 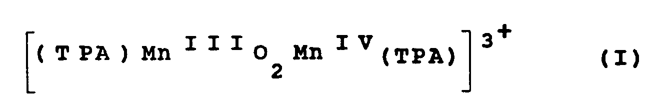 dans lequel le TPA est un ligand tétradenté constitué par la tris(pyridinyl-2-méthyl)amine.

Le complexe (I) est obtenu en mélangeant dans de l'eau du TPA et du Mn SO₄. H₂0, puis en ajoutant du peroxyde d'hydrogène. Par ajout de dithionate de sodium, le sel [(TPA) MnO] ₂. (S₂0₆)_{3/2}. 7H₂0 cristallise et sa structure est déterminé par rayon X.

Uehara et al , Chemistry Letters, 1988, 477-480 ont isolés les complexes :

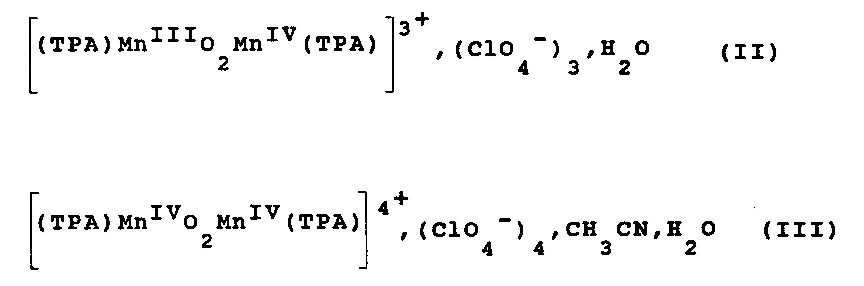

(II) étant obtenu par oxydation avec du peroxyde d'hydrogène et (III) par oxydation électrochimique de (II) dans l'acétonitrile.

Hodgson et al., J. Am. Chem. Soc 1990, 112, 6248-6254, rappellent que l'utilisation possible des complexes bis (µ-oxo) de di-manganèse en tant que catalyseurs redox découle des observations préliminaires de Gref et al., Nouv. J. Chem; 1984, 8, 615-618 qui ont oxydé électrochimiquement des alcools et des éthers en présence des complexes bpy et phen du manganèse (voir ci-dessus) et des travaux de Ramaraj et al. Angew Chem. Int. Ed. Engl. 1986, 25, 825-827, qui ont montré que le complexe bpy oxydait l'eau en présence d'un oxydant chimique tel que l'ion cérium IV.

Dans la publication ci-dessus, D.J. Hodgson et al., rappellent ou décrivent l'obtention de complexes du type de formule générale (IV) : 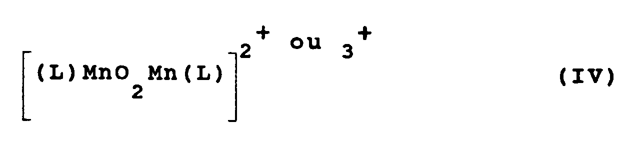 accessibles à partir de Mn ^{II} par oxydation par le peroxyde d'hydrogène en présence du ligand (L) de formule générale (V) ou (VI) : 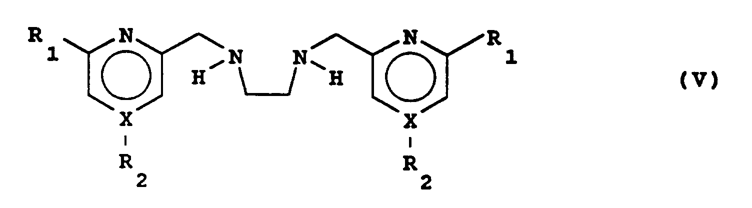 dans laquelle :
R1 = R2 = H ; X = C ; ( Bispicen ) ou
R1 = CH₃ ; R2 = H ; X = C ; ou
R1 = H ; R2 = CH₃ ; X = C ;
R1 = H ; X = N ;
ou bien: 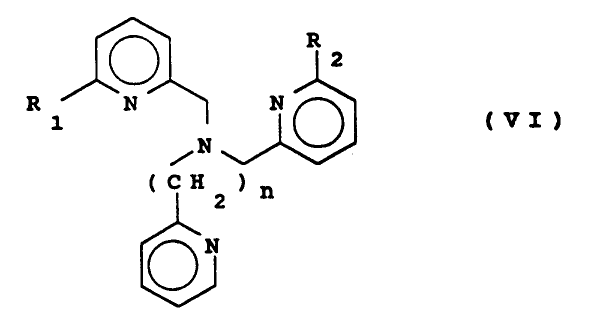 dans laquelle :
R1 = R2 = H ; n = 1 [TPA] ; ou
R1 = CH₃ ; R2 = H ; n = 2 ; ou
R1 = R2 = CH₃ ; n = 1.

Les propriétés électrochimiques de ces complexes ont été étudiées par voltamétrie cyclique dans l'acétonitrile.

Hodgson et al., Inorg. Chem. 1990, 29, 2435-2441 ont synthétisés de nouveaux ligands apparentés à ceux ci-dessus.
- (2-(2-pyridyl)éthyl)-bis-(2-pyridylmethyl)amine (L1)
- (1-(2-pyridyl)éthyl) (2-(2 pyridyl)éthyl) (2 pyridyl-méthyl)amine (L2),
- ((6-méthyl-2-pyridyl)méthyl) (2-(2-pyridyl)éthyl (2-pyridylméthyl)-amine (L3),
- ((6-méthyl-2-pyridyl)méthyl)-bis-(2-pyridylméthyl) amine (L4).

Ces ligands L₁, L₂, L₃, L₄ conduisent à des complexes di Mn, du type ci-dessus rappelé et catalysent l'époxydation du cyclohexène en présence de iodosobenzène agissant comme oxydant primaire.

Le complexe (L₃).Mn^{III}-0₂-Mn^{IV} (L₃), (Cl0₄)₃
a été préparé par oxydation à l'aide de peroxyde d'hydrogène puis oxydé par du NaOCl mis en milieu acide pour donner le complexe :
(L₃). Mn^{IV}-0₂-Mn^{IV}.(L₃), (Cl0₄)₄

Les Demandes de brevet EP-A-0458398 et EP-A-0458397 (UNILEVER NV et PLC) rapportent un milieu de blanchiment comprenant un agent de blanchiment peroxy et un complexe de coordination du manganèse (ou un précurseur de celui-ci) pour une utilisation dans le lavage et le blanchiment de substrats, notamment blanchissage de textile ou lavage de vaisselle à pH basique.

Ce dernier complexe de coordination a la formule générale (A): 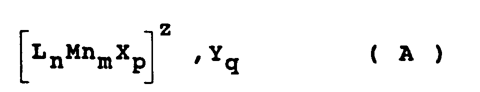 dans laquelle :
- Mn est le manganèse dans l'état d'oxydation IV,
- n et m valent indépendamment les nombres entiers de 2 à 8,
- X pouvant représenter un groupe de coordination ou de pontage tel que H₂0, OH⁻, 0₂²⁻,O²⁻, HO₂⁻, SH⁻, S²⁻,-SO-, NR₂⁻, RCOO⁻, NR₃, Cl⁻, N₃⁻, SCN⁻, N³⁻, ou leur combinaison, avec R représentant H, alkyle, aryle (éventuellement substitué),
   p est un nombre entier de 0 à 32, de préférence 3 à 6,
   Y est un contre ion dont le type dépend de la charge z du complexe;si z est positif alors Y représente un anion tel que Cl⁻,Br⁻,I⁻,NO₃⁻,Cl0₄⁻,NCS⁻,PF₆⁻,RSO₃⁻RSO₄⁻,CF₃SO₃⁻,BPh₄⁻ou OAc⁻;si z est négatif, alors Y est un cation d'un métal alcalin ou alcalino-terreux ou encore un cation (alkyl)ammonium,
   z est un nombre entier négatif ou positif,
   q = z/charge de Y,
   L est ligand qui est une molécule organique contenant un certain nombre d'hétéro atomes (N, P, O et S) dont certains coordonnent les atomes de manganèse.

Parmi cette famille de complexes de formule (A), les préférés sont de formule générale (C) :

[(L) Mn^{IV} (µ-O)₃ Mn^{IV} (L)]^{z} Y_{q} (C)

dans laquelle L, Y, q et z sont identiques à ceux de la formule (A).

Une classe préférée de ligands L qui correspondent à la formule (C) sont des ligands tridenté coordinant chaque centre manganèse (IV) par 3 atomes d'azote N.

Parmi 19 de ces derniers (à 3 atomes d'azote) figure la Bis-(pyridin-2-yl-méthyl) amine.

Les agents de blanchiment peroxy mis en oeuvre comprennent le peroxyde d'hydrogène (H₂O₂), les composés libérant ou générant H₂O₂, notamment le perborate de sodium, les acides peroxy et leurs sels.

Tous les exemples de cette demande de brevet (EP-A-0458398) rapportent le blanchiment ,à l'aide de ces complexes, de textile de coton taché, à des pH basiques compris entre 10 et 11.

Le problème de délignifier sélectivement les matières lignocellulosiques sans trop dépolymériser la cellulose et sans avoir d'effluents industriels indésirables pour l'environnement reste d'actualité.

Comme le rappelle H.U. Süss, Bleaching, vol. A4, 191-199, 1985, dans l'industrie du papier le blanchiment de la pâte par des agents oxydants présente des inconvénients inhérents aux propriétés de l'agent d'oxydation utilisé ou aux conditions physico-chimiques du procédé mis en oeuvre.

L'oxygène par exemple est peu sélectif et dégrade également fortement la cellulose en milieu NaOH et, à un degré moindre,en présence de sels de magnésium.

Le chlore est un agent relativement sélectif de délignification. Dans les conditions acides utilisées il provoque l'oxydation mais aussi la substitution électrophile des noyaux aromatiques de la lignine, produisant des acides dicarboxyliques et des fragments chlorés de la lignine. Ces derniers représentent un danger potentiel pour l'environnement.

Le peroxyde d'hydrogène est essentiellement utilisé en milieu basique. Ce milieu basique entraîne une certaine dépolymérisation de la cellulose.

Le but de la présente invention est la mise au point d'un nouveau moyen de délignification et de blanchiment des matières lignocellulosiques en suspension dans un milieu aqueux.

Un autre but, plus particulier, est d'éviter la nucléophilie du chlore dans le blanchiment de la pâte à papier pour supprimer les problèmes d'environnement potentiels liés aux TOX ("total organically bound halogens").

Un troisième but est d'utiliser les oxydants oxygénés comme l'ozone, le peroxyde d'hydrogène ou leurs mélanges, dans une délignification et un blanchiment en milieu aqueux acide ou neutre en ajustant à une valeur choisie le potentiel d'oxydation de ce milieu.

La présente invention est un procédé de délignification et de blanchiment d'une matière lignocellulosique en suspension dans un milieu aqueux comportant un oxydant et un catalyseur d'oxydoréduction choisi dans une famille de complexes ligandés du manganèse dont certains ont déjà été décrits,notamment par D.J.Hodgson et al.

Plus précisément la présente invention est un procédé de délignification et de blanchiment d'une matière lignocellulosique dans lequel on fait réagir une solution aqueuse d'un catalyseur redox et d'un oxydant sur la dite matière, caractérisé en ce que ledit catalyseur comporte un cation organométallique de formule générale (VII) : 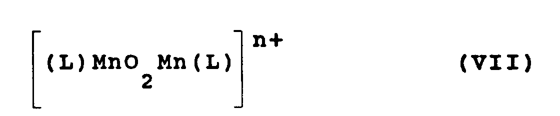 dans laquelle:
Mn représente le manganèse dans un état d'oxydation III ou IV, les deux Mn de ce cation pouvant former un couple d'état d'oxydation III-III ou III-IV ou IV-IV,
n vaut 2,3 ou 4,
O représentant l'oxygène,
L représente un ligand de formule générale (VIII) : 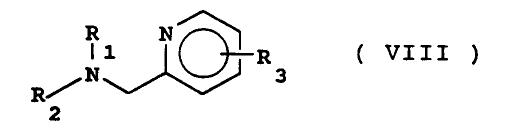 dans laquelle:
   soit
R₁ représente le radical: 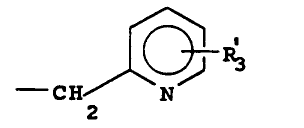
R₂ représentant alors le radical: 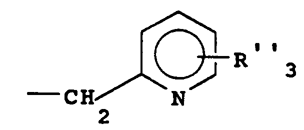
R_{3,} R'₃, et R''₃ représentant chacun, indépendamment les uns des autres, un groupe choisi parmi l'hydrogène, alkyle inférieur en C₁ à C₄, alkoxy inférieur en C₁ à C₄, halogène,
   soit
R₁ représente le radical: 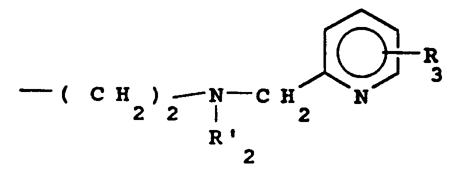
R₂ et R'₂ étant alors identiques et représentant un groupe choisi parmi hydrogène,alkyle inférieur en C₁ à C₄,
R₃ représentant un groupe choisi parmi hydrogène, alkyle inférieur en C₁ à C₄, alkoxy inférieur en C₁ à C₄, halogène et en ce que le pH de ladite solution aqueuse est inférieur à 7.

Dans la formule (VII) ci-dessus le contre-anion n'est pas représenté,mais il peut avoir,par exemple, la même signification que celle de Y des formules ci-dessus (A) ou (C).

Ce procédé présente l'avantage que le cation organométallique (VII) est très stable vis à vis du pouvoir oxydant du milieu et que la solution le contenant après réaction peut être récupérée et remise en réaction avec un nouveau lot de matière lignocellulosique auquel a été additionné de l'oxydant.

Avantageusement le pH de la solution aqueuse est compris entre 2 et 5.

Avantageusement, afin d'éliminer par extraction les produits d'oxydation de la matière lignocellulosique, celle-ci, après la réaction d'oxydation ((VII) + oxydant), est traitée par une solution aqueuse basique.

Ce traitement basique peut être précédé par un lavage à l'eau et/ou un pressage de la matière lignocellulosique.

De préférence, l'oxydant est choisi parmi l'ozone, le peroxyde d'hydrogène, un hydroperoxyde d'alkyle, l'acide hypochloreux, le chlore, le bioxyde de chlore ou leurs mélanges. Le critère de sélection de ces oxydants consiste à déterminer leur aptitude à donner le cation de formule générale (VII) dont les deux atomes de manganèse sont dans les états d'oxydations III-III ou III-IV ou IV-IV.

L'état III-III n'est pas toujours isolé pour tous les complexes. Par exemple, dans le cas où L est le TPA, l'état d'oxydation obtenu dans la synthèse de ce complexe où le peroxyde d'hydrogène intervient est III-IV De même lorsque L est le ((6-méthyl-2-pyridyl)méthyl))(2-(2-pyridyl)éthyl)(2-pyridylméthyl)amine(L3), le cation (VII) obtenu par l'action de l'eau oxygénée est III-IV. L'oxydation chimique de ce complexe par du NaOCl placé en milieu acide donne l'état d'oxydation IV-IV.

Par contre, dans le cas ou L est le bis-((6 méthylpyrid-2-yl)méthyl)-N-2-pyridyl-méthylamine, l'état d'oxydation obtenu par le peroxyde d'hydrogène est III-III.

Les combinaisons préférées des cations redox de formule générale (VII) avec les oxydants sont celles qui conduisent à un état d'oxydation III-IV et/ou IV/IV.

De préférence l'oxydant est ajouté peu à peu à la solution du catalyseur redox (VII) en présence de la pâte, de telle manière qu'il n'y ait pas un excès d'oxydant pouvant réagir directement avec la matière lignocellulosique.

Le potentiel d'oxydation est alors en quelque sorte tamponné à celui du catalyseur redox (VII) dans son état III-IV ou, selon le cas, IV-IV, sachant que le potentiel d'oxydation de l'oxydant est par principe toujours supérieur à celui du catalyseur redox.

La matière lignocellulosique mise en réaction est avantageusement du bois fragmenté ou de la pâte à papier contenant de la lignine.

De préférence, chaque groupe R₃, R'₃, R''₃, est en position para par rapport au doublet de l'azote pyridinique.

Avantageusement chaque groupe R₃, R'₃, R''₃, est choisi parmi alkyle inférieur et alkoxy inférieur.

Avantageusement le rapport en poids du catalyseur redox à la matière lignocellulosique est compris entre 0,1 et 10 %. De préférence, pour avoir une cinétique d'oxydation suffisamment rapide la température de ladite solution aqueuse d'oxydant et de catalyseur est comprise entre 80 et 100°C. Enfin, de manière préférée le rapport molaire catalyseur oxydant est compris entre 0,1 et 4 %.

Avantageusement, le rapport en poids de la matière lignocellulosique à l'oxydant est compris entre 2 et 100.

D'une manière générale, les ligands de formule générale (VIII) sont synthétisés à partir des composés pyridiniques de formule générale (IX) : 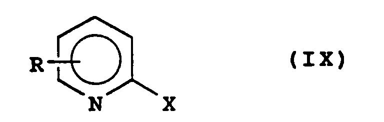 dans laquelle:
R représente un groupe choisi parmi H ,alkyle inférieur,alkoxy inférieur,halogène,
R est en position 3,4,5 ou 6,sur le noyau pyridinique, et de préférence en position 4.
X représente un groupe choisi parmi -CH₃, -CH₂OH, - CH₂Cl, -CHO, -CH=N-OH, -COCH₃, -CO₂H, -CO₂R' avec R' représentant un alkyl inférieur, -CN, -CH₂NH₂.

Les différents groupes X ci-dessus peuvent être obtenus par des réactions connues, les uns à partir des autres, par fonctionnalisations,réductions ou oxydations.

Certains composés (IX) sont commerciaux et figurent par exemple dans le catalogue Aldrich 1991-1992.

Ces produits sont indiqués dans le tableau 1 suivant:

**TABLEAU 1**

| **R** | **X** |
|---|---|
| H | -CH₃ |
| H | -CH₂OH |
| H | -CH₂Cl |
| H | -CHO |
| H | -CH=NOH |
| H | -COCH₃ |
| H | -CO₂H |
| H | -CN |
| H | -CH₂NH₂ |
| 3-CH₃ | -CH₃ |
| 4-CH₃ | -CH₃ |
| 5-CH₃ | -CH₃ |
| 6-CH₃ | -CH₃ |
| 6-CH₃ | -CHO |
| 6-Cl | -CH₃ |

D'autres composés (IX) sont connus de la littérature et sont rassemblés dans le tableau 2 suivant:

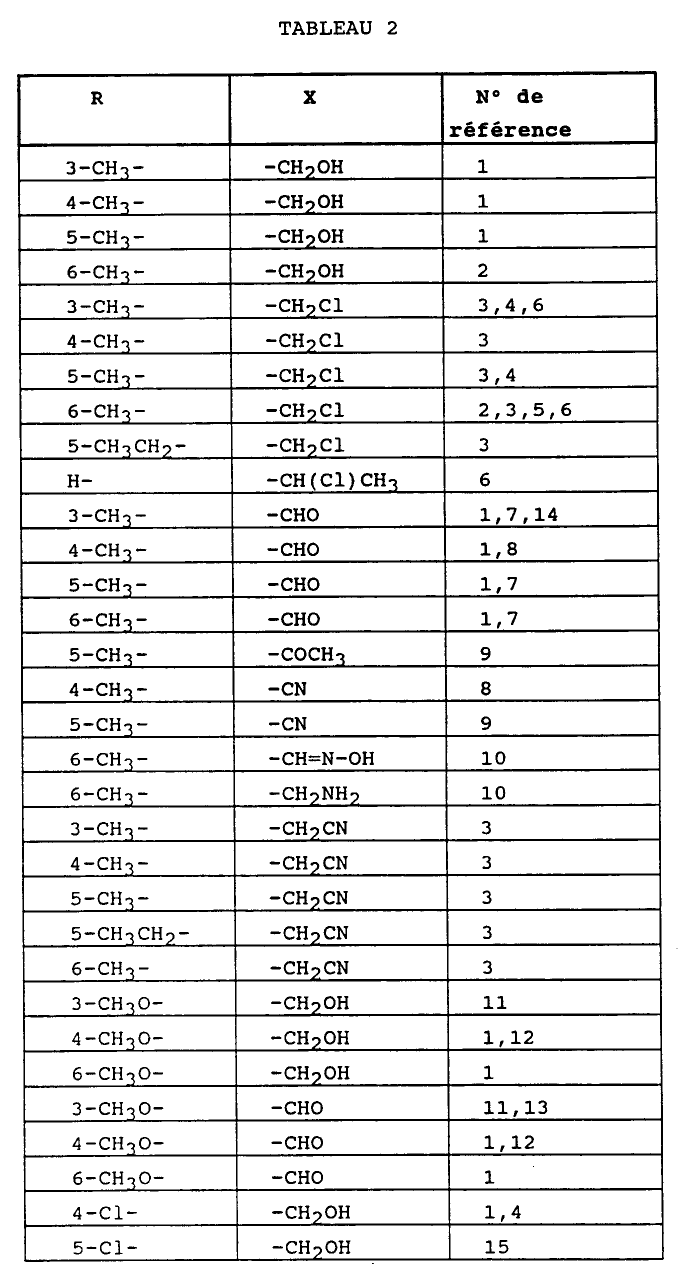

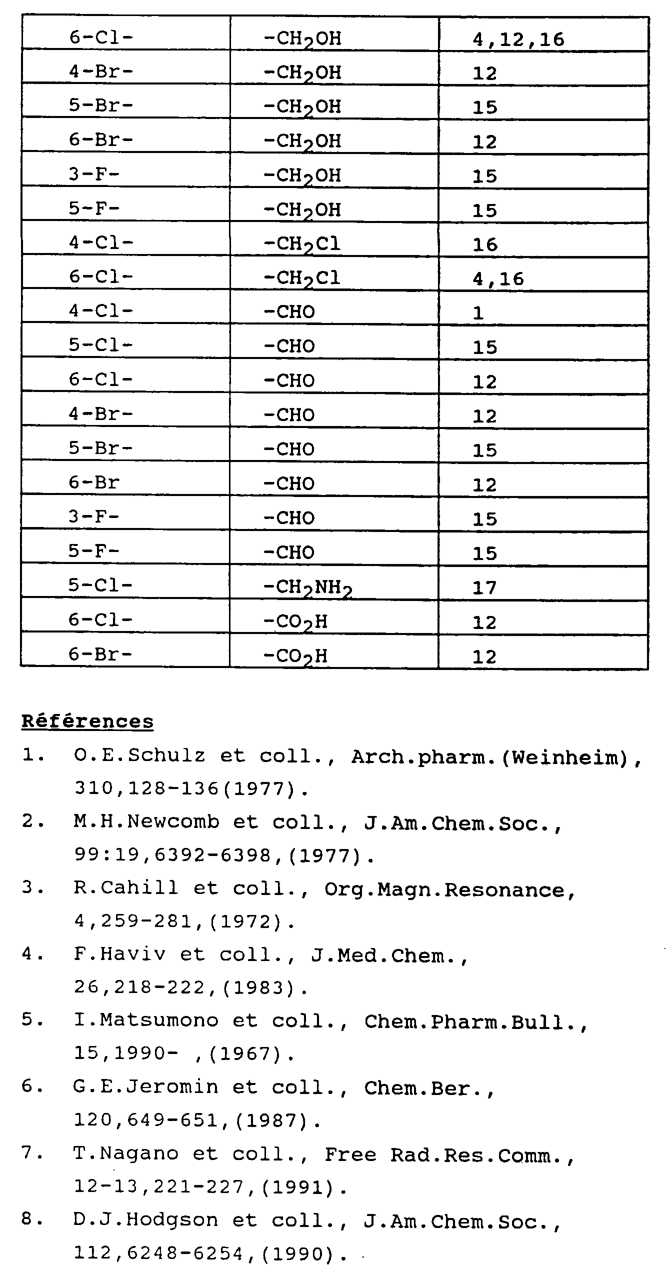

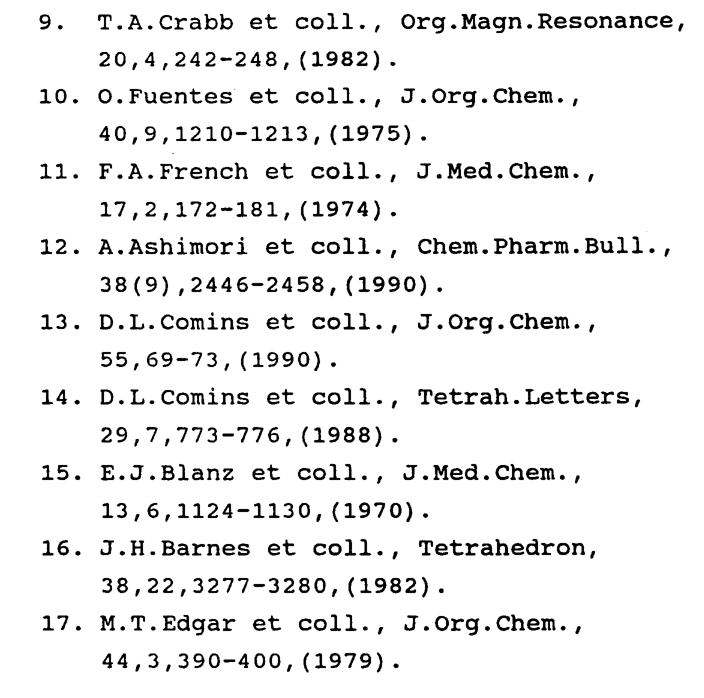

La synthèse des composés (IX) avec X = -CH₂NH₂ peut être éffectué à partir de l'aldéhyde correspondant en formant l'aldoxime par réaction avec de l'hydroxylamine,puis en réduisant cette oxime par réduction catalytique selon la référence 10 ci-dessus,ou par de l'hydrure double de lithium et d'aluminium dans un solvant approprié,par exemple de l'ether, selon le schéma (1) suivant:

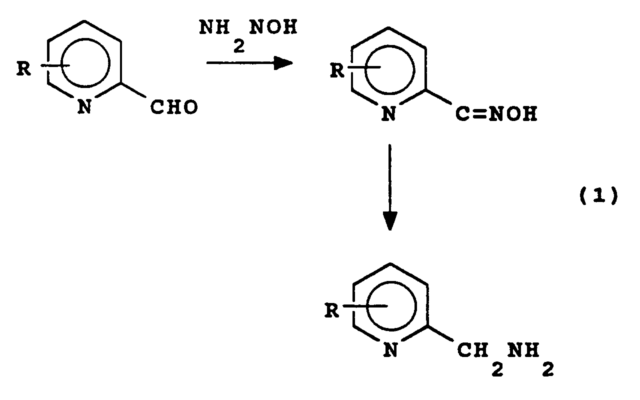

Les ligands de formule générale (VIII) sont synthétisés, par analogie aux procédés mis en oeuvre par A.R.Oki,J.Glerup,D.J.Hodgson,Inorg.Chem.,29,2435-2441,(1990):
1°) Synthèse de ligands (VIIIA) du type TPA selon le schéma (3) suivant: 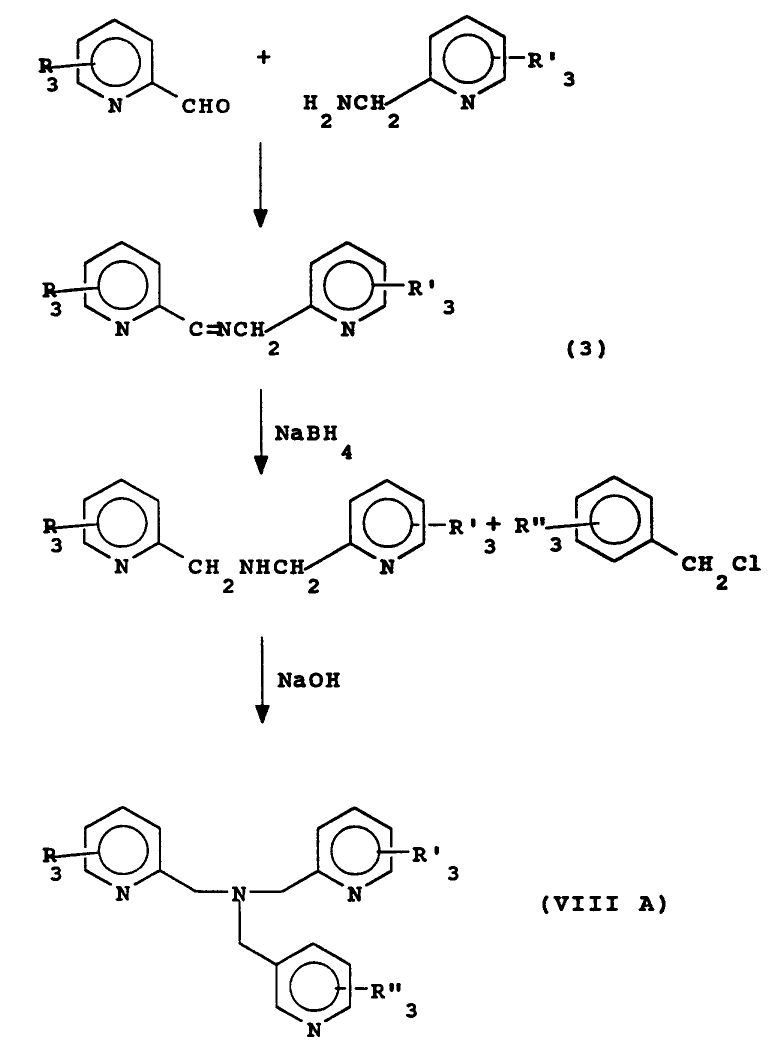
2°) Synthèse de ligands (VIII B) du type Bispicen substitué selon le schéma
(4) suivant:

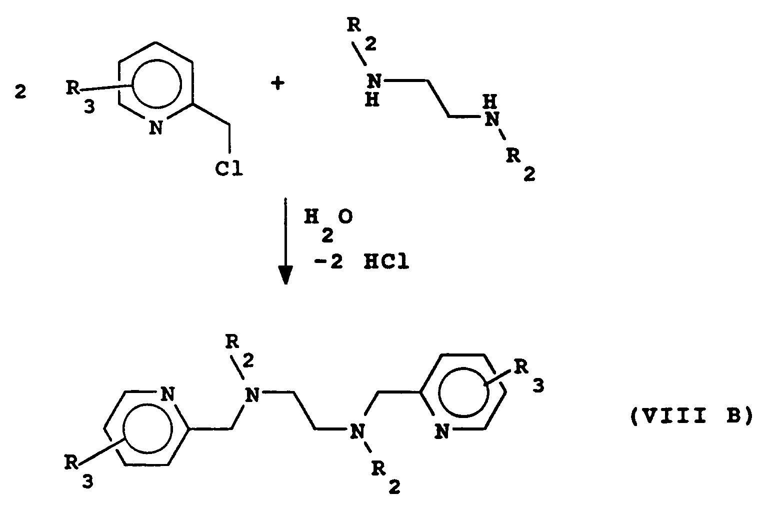

Les catalyseurs (VII) dans lesquels n vaut 2 ou 3 sont obtenus en mélangeant dans de l'eau un sel comportant le cation Mn²⁺ notamment apporté par MnSO₄ ou MnCl₂ avec un ligand L (VIII) en présence d'eau oxygénée, selon les procédés décrits par D.J. Hodgson (voir ci-dessus).

Les complexes (VII) dans lesquels n vaut 4, sont obtenus en oxydant les complexes correspondants dans lesquels n vaut 2 ou 3 par des oxydants plus puissants que le peroxyde d'hydrogène, par exemple, l'acide hypochloreux (HClO), le bioxyde de chlore (Cl0₂), le chlore, ou l'ozone.

La présente invention sera mieux comprise à l'aide des exemples suivants donnés à titre purement illustratif. Les essais de délignification et de blanchiment sont effectués sur des lots homogènes de pâte écrue de feuillus(A) ou de pâte écrue de résineux(B).

Les qualités de la pâte à papier : Indice Kappa (K) de la pâte et degré de polymérisation de la cellulose (DP) sont déterminés comme précisé ci-après.

La détermination de l'indice Kappa, mesure objective de la lignine contenue dans la pâte, est effectuée comme suit :
- on oxyde la lignine par du KMn0₄ en milieu faiblement acide. L'indice kappa est défini [selon la norme NF/150-302] comme le nombre de millilitres d'une solution 0,02 M de KMn0₄ nécessaire à l'oxydation complète d'un gramme (poids sec) de pâte à papier.
   Un point Kappa représente donc :10⁻³ x (0,02 x 5) x e⁻soit O, 1 m équivalent électronique /g de pâte.
   La méthode de mesure du degré de polymérisation consiste à mesurer la viscosité spécifique d'une solution de pâte dans la cupri-éthylène diamine et à en déduire le degré de polymérisation moyen (DP), selon la norme française NF T 12 005 (mars 1953).
   Les pâtes sont préalablement lavées à l'eau (90°C, 20 min) séchées à l'étuve (50°C, sous vide), puis font l'objet d'une première détermination de l'indice Kappa et du DP. Les deux pâtes utilisées ont alors les caractéristiques suivantes rassemblées dans le tableau 3.

**TABLEAU 3**

| Nature de la pâte initiale | K initial | DP initial |
|---|---|---|
| Pâte écrue de feuillus (A) | 19 | 1190 |
| Pâte écrue de résineux (B) | 29 | 1350 |

### Exemple 1 :

### Préparation des ligands (VIII B) du type Bispicen.

La N,N'-Diméthyléthylènediamine est commerciale, les autres diamines sont obtenues selon la publication "Helvetica Chim. Acta, 57, 1974, p.1036.

Les chlorométhyl-pyridines substituées sont préparées à partir des composés N-oxydes correspondants selon les références suivantes:
18. E.C. Taylor Jr., and A.J.Crouetti, (1956),36,p.53
19. H.J. Hertog, W.P. Combe, Rec. Trav. Chim.,(1951), 70, 581.
20. J.H.Barnes, F.R. Hartley, C.E.L. Jones, Tet.,(1982), 38,(22), 3277.

La diamine (10 mmole) est mise en solution dans de l'eau (5 ml), puis on ajoute du chlorure de picolyle, substitué ou non ,(20 mmoles). On additionne ensuite de la soude 5N de manière à maintenir le pH de 9 à 9,5. Si le milieu réactionnel comporte trop de composés insolubles,on ajoute de l'éthanol (5ml).

Lorsque le pH du milieu ne varie plus,on alcalinise à pH supérieur à 12 et on extrait soit à l'ether, soit au dichlorométhane. La phase organique est soit distillée, soit chromatographiée sur alumine basique en éluant au dichlorométhane.

Les diamines peuvent être transformées en leur chlorhydrates par bullage de HCl gazeux dans leur solution éthérée.
**Diamine (VIII B-1) avec R**_{**2**} **= R'**_{**2**} **= CH**_{**3**} **et R**_{**3**} **= H.**
   Huile jaune, Eb.= 120-130°C / 0,05 mm Hg.
   R.M.N. ¹H ,90 Mhz, CDCl₃, en p.p.m.:
      2,10(s, 6H); 2,4(s, 4H);
      4,3 (s, 4H); 7,2-8,3(m, 8H).
**Diamine (VIII B-2) avec R**_{**2**} **= R'**_{**2**} **= CH**_{**3**} **et R**_{**3**} **= 4-Cl**
   Chlorhydrate (HCl), tp de fusion = 162-164°C..
   R.M.N. ¹H , 90 Mhz, DMSO d⁶, en p.p.m.:
      2,45(s, 6H); 3,8(s,4H); 4,6(s,4H);
      7,2-8,3(m, 10H).
**Diamine (VIII B-3) avec R**_{**2**} **= R'**_{**2**} **= CH**_{**3**} **et R**_{**3**} **= 4-OEt.**
   Chlorhydrate (HCl), tp de fusion = 168-170°C.
   R.M.N. ¹H ,90 Mhz, CDCl₃, en p.p.m.:
      1,09(t, 6H);2,03(s, 6H); 2,4(s, 4H)
      4,35(s, 4H); 4,52(q,4H); 6,6-8,2(m, )

### Exemple 2:

### 1) Etape de délignification et de blanchiment

Dans un récipient en verre à double enveloppe pour maintenir la température à la valeur choisie, on place 400 ml d'eau distillée, puis 207 mg (350 µmole) du ligand TPA (tris (pyridin-2-yl-méthyl) amine ) et 59 mg (349 µ mole) de MnSO₄, H₂O et enfin 5 g de pâte à bois (soit dans un rapport théorique de 70 µmole de futur catalyseur redox [(TPA)Mn^{III}0₂ Mn^{IV}(TPA)]³⁺ pour 1 g de pâte.

Puis on ajoute le peroxyde d'hydrogène en solution dans l'eau en une seule fois au début de la réaction ou bien progressivement au cours du temps, sous agitation du milieu hétérogène.

Les essais sont menés à différentes températures (60°C, 80°C, 90°C, 98°C ,pendant une durée déterminée.

### 2) Arrêt de la réaction et lavage

La réaction d'oxydation précédente est arrêtée par lavage de la pâte au tampon pyrophosphate 0,1 M de pH 6,0.

### 3) Extraction alcaline

Après le lavage précédent la pâte est placée durant 1 heure dans une solution de soude 0,25 M à 60°C.

Cette opération a pour but d'extraire de la pâte les composés fragmentés,phénols et carboxylates,solubles dans la solution alcaline à chaud. La pâte ainsi traitée est lavée abondamment à l'eau afin d'éliminer toutes traces basiques, essorée et séchée à l'étuve (50°C) sous vide. On effectue alors une nouvelle détermination de l'indice Kappa et éventuellement également du DP.

Le tableau 4 rassemble les teneurs en H₂0₂ et les indices Kappa obtenus avec ou sans manganèse, à une température de 90°C, pour une durée d'oxydation de 3 heures et à un pH de 3,5.

**TABLEAU 4**

| | K obtenu sans Mn | K obtenu avec 70 micromole de Mn²⁺/ g de pâte |
|---|---|---|
| Pâte (A) K initial = 19 H₂O₂ = 1.85mmoles/g de pâte | 12,5 | 3,3 |
| Pâte (B) K initial = 29 H₂O₂ = 2,8 mmoles/g de pâte | 20,5 | 3,4 |

Sachant que 1 mmole d'H₂0₂ apporte 2 milli-équivalent électronique, pour une pâte de Kappa 19, il faudrait une quantité théorique de 1,9 milli-équivalent/g de pâte soit 1,9 mmole de H₂0₂/g de pâte, et pour un Kappa de 29, 2,9 mmoles de H₂0₂/g de pâte. On remarque dans les essais ci-dessus que l'indice Kappa passe de 19 à 3,3 pour la pâte A et de 29 à 3,4 pour la pâte B.

### Exemple 3.

Dans cet exemple, l'influence du pH du milieu réactionnel lors de l'oxydation a été étudié. Les deux pâtes A et B ont été traitées d'une manière analogue à l'exemple 1, étant précisé que la durée de l'étape 1) est de 3 h, la température est de 90°C. On fait varier le pH du milieu aqueux de l'étape 1) grâce à l'utilisation d'un milieu tamponné à base d'acide succinique et de soude. Les résultats obtenus figurent dans le tableau 5 ci-après:

**TABLEAU 5**

| Traitement des pâtes | Pâte (A) K |
|---|---|
| Sans traitement | 19 |
| Avec traitement pH = 3,5 ;sans Mn | 12,5 |
| pH = 2 ;avec Mn | 7 |
| 2,5 ;avec Mn | 5 |
| 3,0 ;avec Mn | 4,3 |
| 3,7 ;avec Mn | 2,3 |
| 5,0 ;avec Mn | 5,9 |
| 6,0 ;avec Mn | 9,3 |
| 7,0 ;avec Mn | 10,3 |

On peut observer un effet maximum pour la pâte A à un pH de 3,6.

### Exemple 4

On a étudié les effets de la température du milieu réactionnel de l'étape de délignification et de blanchiment (étape 1) analogue à celle de l'exemple 1, le pH valant 3,5, la teneur initiale de H₂0₂ étant de 1,85 mmoles/g de pâte A pour une durée d'oxydation de 5 h.

Les résultats sont rassemblés dans le tableau 6 :

**TABLEAU 6**

| Température d'oxydation, °C | K sans Mn | K avec 70 µM Mn²⁺/g de pâte |
|---|---|---|
| 60 | 13,0 | 6,4 |
| 80 | 12,1 | 4,7 |
| 90 | 12,5 | 2,5 |
| 98 | 10,4 | 2,6 |

### Exemple 5

On a étudié les effets de la durée de l'étape 1) les conditions étant pour les autres paramètres identiques à celles de l'exemple 3, la température étant de 90°C. Les résultats apparaissent dans le tableau 7 :

**TABLEAU 7**

| Durée en heures | K ,sans Mn | K avec 70 µM/g de pâte |
|---|---|---|
| 0 | 18,5 | 18,5 |
| 1 | 14,7 | 5,4 |
| 2 | 14,2 | 4,5 |
| 3 | n.d. | 3,3 |
| 4 | n.d. | 2,9 |
| 5 | n.d. | 2,9 |
| 16 | n.d. | 2,5 |

### Exemple 6

L'effet de la teneur en catalyseur redox en µ mole par g de pâte A a été étudié en prenant les conditions de l'exemple 4 pour une durée de 3 h et à une température de 90°C.

Les résultats figurent dans le tableau 8 ci-après

**TABLEAU 8**

| Teneur en catalyseur redox (TPA.MnO₂)₂³⁺ en micromoles/g de pâte | K |
|---|---|
| 70 | 3,0 |
| 35 | 3,3 |
| 17,5 | 5,0 |
| 8,8 | 5,5 |
| 4,4 | 7,1 |

### Exemple 7

L'influence de la quantité de pâte A a été étudiée pour une même quantité en catalyseur redox (TPA Mn0)₂³⁺ de 70 µmoles/g de pâte, de H₂0₂ 1,85 mmoles/g, au pH 3,5 et à la température de 90°C, pendant une durée de l'étape d'oxydation de 3 h, dans 400 ml d'eau.

Les résultats apparaissent dans le tableau 9 :

**TABLEAU 9**

| Quantité de pâte A en g | K |
|---|---|
| 5 | 3,3 |
| 10 | 3,5 |
| 20 | 3,8 |

### Exemple 8

L'influence de ions phosphates apportés par le phosphate disodique a été étudié avec ou sans le complexe (TPA, MnO)₂³⁺, avec une solution aqueuse tamponnée contenant 1,85 mmoles de H₂0₂/g de pâte A et maintenue à 60°C à pH 3,5, pendant une durée d'oxydation de 5 heures.

Les résultats figurent dans le tableau 10:

**TABLEAU 10**

| Phosphate | K ,avec Mn | K sans Mn |
|---|---|---|
| O,1M | 4,8 | 14,8 |
| sans | 5,5 | 12,5 |

On remarque que la présence de phosphate permet de diminuer l'indice Kappa.

### Exemple 9

L'influence du recyclage du catalyseur a été étudiée.

Le mode opératoire est le suivant:
- Durée de réaction:: 4 heures/cycle
- Température:: 90°C
- H₂O₂:: 1,8 mmoles/ g de pâte
- Pâte:: écrue(kappa=18,5),5g par cycle
- Complexe:: Mn^{II}/TPA 75 µmoles/g de pâte (déterminé pour le 1^{er} traitement).

Aprés un premier traitement le milieu réactionnel est séparé de la pâte à papier par filtration. L'indice kappa est déterminé sur la pâte traitée. le milieu réactionnel est mis en contact avec un nouveau lot de pâte. Une nouvelle solution de peroxyde d'hydrogène est introduite de façon continue. On estime que l'on récupère de 40 à 50% du catalyseur après chaque cycle.

Les résultats obtenus figurent dans le tableau 11 :

**TABLEAU 11**

| Nombre de cycle | Indice kappa |
|---|---|
| 1 | 3,1 |
| 2 | 4,3 |
| 3 | 5,9 |
| 4 | 7,5 |

### Exemple 10

L'influence des conditions expérimentales de l'étape d'oxydation (étape 1) a été étudiée sur la pâte A et ressort des résultats figurant au tableau 12 ci-après:

**TABLEAU 12**

| 70 µmoles de complexe et 1,85 mmoles de H₂O₂/ g de pâte | DP | Kappa |
|---|---|---|
| Influence de la durée en heures | | |
| 1 | 730 | 5,4 |
| 2 | 720 | 4,5 |
| 3 | 710 | 3,3 |
| 4 | 710 | 3,0 |
| 5 | 710 | 2,9 |
| 16 | 600 | 2,5 |

| nfluence de la quantité de pâte en g | | |
|---|---|---|
| 5 | 710 | 3,3 |
| 10 | 700 | 3,5 |
| 20 | 710 | 3,8 |

| Rôle des complexants: | | |
|---|---|---|
| Rapport molaire TPA/Mn^{II}= 1,5: | 800 | |
| +0,5 équivalent d'EDTA : | 860 | |

| Influence de la tp en °C | | |
|---|---|---|
| 60 | 750 | 6,4 |
| 80 | 760 | 4,7 |
| 90 | 710 | 3,0 |
| 98 | 720 | 2,6 |

### Exemple 11

Une pâte écrue de feuillus ayant un indice Kappa égal à 13, est soumise aux mêmes étapes que l'exemple 1, mais avec des ligands du type Bispicen.

Le tableau 13 ci-après montre le rôle des substituants sur l'indice Kappa obtenu.

**TABLEAU 13**

| Ligands | Indice Kappa |
|---|---|
| Bispicen | 7 |
| VIII B-1 | 3,5 |
| VIII B-2 | 5,4 |
| VIII B-3 | 3,0 |

La substitution des deux hydrogènes des deux atomes d'azote aliphatique du Bispicen par des groupes Méthyle (VIII B-1) améliore la délignification.

Par contre la substitution de chaque noyau pyridyle par un chlore en position 4,(VIII B-2) augmente l'indice Kappa par rapport à (VIII B-1) et ainsi n'est pas favorable.

Un radical éthoxy (-OEt) en position 4 conduit à un résultat légérement meilleur que (VIII B-1).

## Revendications

1. Procédé de délignification et de blanchiment d'une matière lignocellulosique dans lequel on fait réagir une solution aqueuse d'un catalyseur redox et d'un oxydant sur la dite matière, caractérisé en ce que ledit catalyseur comporte un cation organométallique de formule générale (VII) : 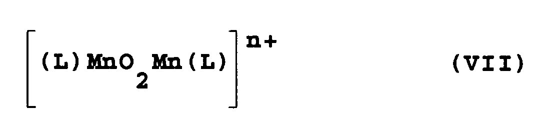 dans laquelle:
Mn représente le manganèse dans un état d'oxydation III ou IV, les deux Mn de ce cation pouvant former un couple d'état d'oxydation III-III ou III-IV ou IV-IV,
n vaut 2,3 ou 4,
O représentant l'oxygène,
L représente un ligand de formule générale (VIII) : 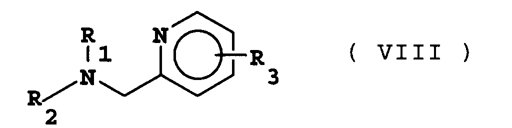 dans laquelle:
soit
R₁ représente le radical: 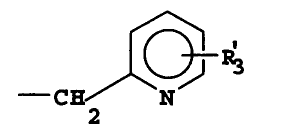
R₂ représentant alors le radical: 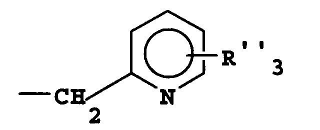
R_{3,} R'₃, et R''₃ représentant chacun, indépendamment les uns des autres, un groupe choisi parmi l'hydrogène, alkyle inférieur en C₁ à C₄, alkoxy inférieur en C₁ à C₄, halogène,
soit
R₁ représente le radical: 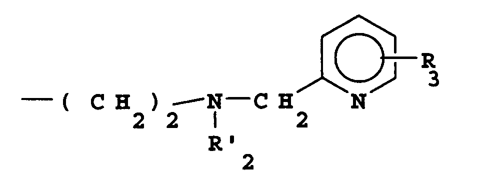
R₂ et R'₂ étant alors identiques et représentant un groupe choisi parmi hydrogène,alkyle inférieur en C₁ à C₄,
R₃ représentant un groupe choisi parmi hydrogène, alkyle inférieur en C₁ à C₄, alkoxy inférieur en C₁ à C₄, halogène et en ce que le pH de ladite solution aqueuse est inférieur à 7.

2. Procédé suivant la revendication 1, caractérisé en ce que ledit pH est compris entre 2 et 5.

3. Procédé suivant l'une des revendications 1 à 2, caractérisé en ce que après la réaction d'oxydation la matière lignocellulosique obtenue est traitée par une solution aqueuse basique.

4. Procédé suivant l'une des revendications 1 à 3, caractérisé en ce que ledit oxydant est ajouté peu à peu à la solution du catalyseur redox de telle manière qu'il n'y ait pas un excès dudit oxydant pouvant agir directement avec ladite matière lignocellulosique.

5. Procédé suivant l'une des revendications 1 à 4, caractérisé en ce que ledit oxydant est choisi parmi l'ozone le peroxyde d'hydrogène, un hydroperoxyde d'alkyle, l'acide hypochloreux, le chlore, le bioxyde de chlore ou un de leurs mélanges.

6. Procédé suivant la revendication 5, caractérisé en ce que ledit oxydant est le peroxyde d'hydrogène.

7. Procédé suivant l'une des revendications 1 à 6, caractérisé en ce ladite matière lignocellulosique est du bois fragmenté.

8. Procédé suivant l'une des revendications 1 à 6, caractérisé en ce que ladite matière lignocellulosique est de la pâte à papier contenant de la lignine.

9. Procédé suivant l'une des revendications 1 à 10, caractérisé en ce que le rapport en poids dudit catalyseur à la matière lignocellulosique est compris entre 0,1 et 10%.

10. Procédé suivant l'une des revendications 1 à 9, caractérisé en ce que la température de ladite solution aqueuse est comprise entre 80 et 100°C.

11. Procédé suivant l'une des revendications 1 à 10, caractérisé en ce que le rapport molaire catalyseur/oxydant est compris entre 0,1 % et 4 %.

12. Procédé suivant l'une des revendications 1 à 11, caractérisé en ce que le rapport en poids de ladite matière lignocellulosique à l'oxydant est compris entre 2 et 100.

## Claims

1. Process for the delignification and bleaching of a lignocellulose material in which an aqueous solution of a redox catalyst and of an oxidising agent is reacted with the said material, characterized in that the said catalyst contains an organometallic cation of general formula (VII) 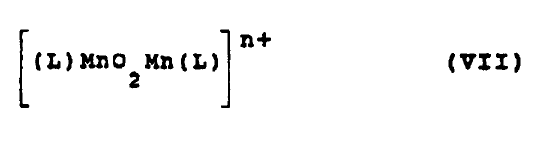 in which:
Mn represents manganese in a III or IV oxidation state, it being possible for the two
Mn atoms of this cation to form the pair in the III-III or III-IV or IV-IV oxidation state,
n has the value 2, 3 or 4,
O representing oxygen,
L represents a ligand of general formula (VIII) : 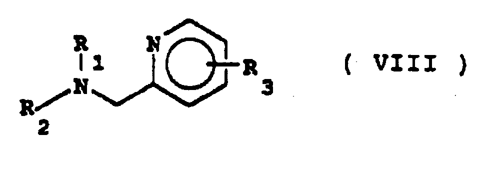
in which
either
R₁ represents the radical : 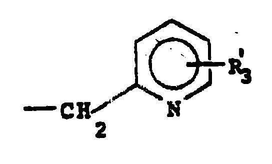
R₂ then representing the radical : 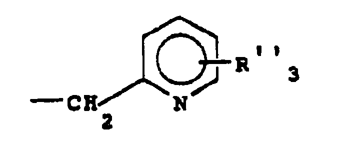
R_{3,} R' ₃ and R'' ₃ each representing, independently of one another, a group chosen from hydrogen, C₁ to C₄ lower alkyl, C₁ to C₄ lower alkoxy or halogen, or
R₁ represents the radical : 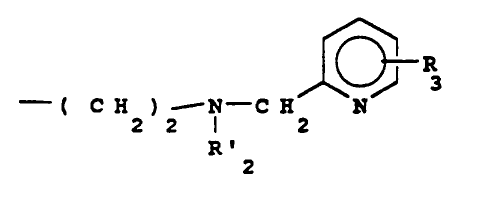
R₂ and R' ₂ then being identical and representing a group chosen from hydrogen or C₁ to C₄ lower alkyl,
R₃ representing a group chosen from hydrogen, C₁ to C₄ lower alkyl, C₁ to C₄ lower alkoxy or halogen, and in that the pH of the said aqueous solution is less than 7.

2. Process according to claim 1, characterised in that the pH is between 2 and 5.

3. Process according to one of Claims 1 to 2, characterised in that, after the oxidation reaction, the lignocellulose material obtained is treated with a basic aqueous solution.

4. Process according to one of Claims 1 to 3, characterised in that the said oxidising agent is added little by little to the solution of the redox catalyst so that there is not an excess of the said oxidising agent which can react directly with the said lignocellulose material.

5. Process according to one of Claims 1 to 4, characterised in that the said oxidising agent is chosen from ozone, hydrogen peroxide, an alkyl hydroperoxide, hypochlorous acid, chlorine, chlorine dioxide or one of their mixtures.

6. Process according to Claim 5, characterised in that the said oxidising agent is hydrogen peroxide.

7. Process according to one of Claims 1 to 6, characterised in that the said lignocellulose material is wood fragments.

8. Process according to one of Claims 1 to 6, characterised in that the said lignocellulose material is paper pulp containing lignin.

9. Process according to one of Claims 1 to 8, characterised in that the ratio by weight of the said catalyst to the lignocellulose material is between 0.1 and 10%.

10. Process according to one of Claims 1 to 9, characterised in that the temperature of the said aqueous solution is between 80 and 100°C.

11. Process according to one of claims 1 to 10, characterised in that the catalyst/oxidising agent molar ratio is between 0.1% and 4%.

12. Process according to one of Claims 1 to 11, characterised in that the ratio by weight of the said lignocellulose material to the oxidising agent is between 2 and 100.

## Patentansprüche

1. Verfahren zur Delignifizierung und zum Bleichen eines Holzzellulosestoffs, bei dem man die wäßrige Lösung eines Redoxkatalysators und eines Oxidationsmittels mit diesem Stoff reagieren läßt, dadurch **gekennzeichnet**, daß der Katalysator ein Organometallkation der allgemeinen Formel VII 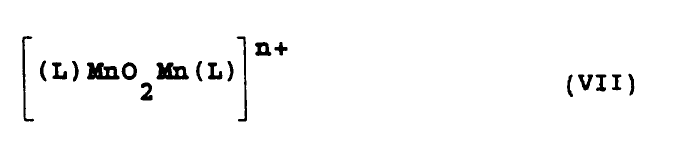 umfaßt, in der Mn Mangan der Oxidationsstuffe III oder IV darstellt, wobei die beiden Mn's dieses Kations ein Oxidationsstufenpaar III-III oder III-IV oder IV-IV bilden können,
n 2, 3 oder 4
und
O Sauerstoff bedeuten, und
L einen Liganden der allgemeinen Formel VIII 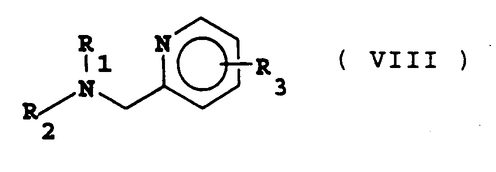
darstellt, worin
R₁ den Rest 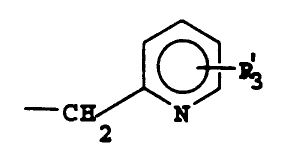 bedeutet,
R₂ somit für den Rest 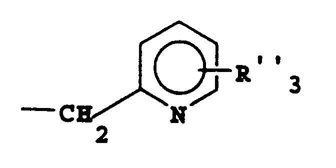 steht,
R₃, R'₃ und R''₃ jeweils unabhängig voneinander eine Gruppe, ausgewählt unter Wasserstoff, C₁-C₄-Niederalkyl, C₁-C₄-Niederalkoxy und Halogen, bedeuten,
oder
R₁ den Rest 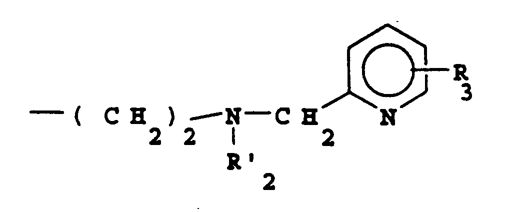 bedeutet, wobei
R₂ und R'₂ somit identisch sind und eine Gruppe, ausgewählt unter Wasserstoff und C₁-C₄-Niederalkyl, darstellen,
R₃ eine Gruppe, ausgewählt unter Wasserstoff, C₁-C₄-Niederalkyl, C₁-C₄-Niederalkoxy und Halogen, bedeutet und der pH der wäßrigen Lösung unter 7 liegt.

2. Verfahren nach Anspruch 1, dadurch **gekennzeichnet**, daß der pH zwischen 2 und 5 liegt.

3. Verfahren nach einem der Ansprüche 1 oder 2, dadurch **gekennzeichnet**, daß der durch die Oxidationsreaktion erhaltene Holzzellulosestoff mit einer basischen wäßrigen Lösung behandelt wird.

4. Verfahren nach einem der Ansprüche 1 bis 3, dadurch **gekennzeichnet**, daß das Oxidationsmittel nach und nach der Lösung des Redoxkatalysators so zugesetzt wird, daß kein Überschuß des Oxidationsmittels vorliegt, der unmittelbar mit dem Holzzellulosestoff reagieren könnte.

5. Verfahren nach einem dar Ansprüche 1 bis 4, dadurch **gekennzeichnet**, daß das Oxidationsmittel unter Ozon, Wasserstoffperoxid, einem Alkylhydroperoxid, Hypochlorsäure, Chlor, Chlordioxid oder ihren Gemischen ausgewählt wird.

6. Verfahren nach Anspruch 5, dadurch **gekennzeichnet**, daß das Oxidationsmittel Wasserstoffperoxid ist.

7. Verfahren nach einem der Ansprüche 1 bis 6, dadurch **gekennzeichnet**, daß der Holzzellulosestoff zerkleinertes Holz ist.

8. Verfahren nach einem der Ansprüche 1 bis 6, dadurch **gekennzeichnet**, daß der Holzzellulosestoff Lignin enthaltende Papiermasse ist.

9. Verfahren nach einem der Ansprüche 1 bis 10, dadurch **gekennzeichnet**, daß das Gewichtsverhältnis von Katalysator zu Holzzellulosestoff 0,1 bis 10 % beträgt.

10. Verfahren nach einem der Ansprüche 1 bis 9, dadurch **gekennzeichnet**, daß die Temperatur der wäßrigen Lösung zwischen 80 und 100°C beträgt.

11. Verfahren nach einem der Ansprüche 1 bis 10, dadurch **gekennzeichnet**, daß das Molarverhältnis von Katalysator zu Oxidationsmittel 0,1 bis 4 % beträgt.

12. Verfahren nach einem der Ansprüche 1 bis 11, dadurch **gekennzeichnet**, daß das Gewichtsverhältnis von Holzzellulosestoff zu Oxidationsmittel zwischen 2 und 100 beträgt.
